(19) **Europäisches Patentamt / European Patent Office / Office européen des brevets**

(11) **EP 4 027 126 A1**

(12) # EUROPEAN PATENT APPLICATION
published in accordance with Art. 153(4) EPC

(43) Date of publication:
**13.07.2022 Bulletin 2022/28**

(21) Application number: **19943910.0**

(22) Date of filing: **03.09.2019**

(51) International Patent Classification (IPC):
**G01M 11/00** (2006.01)

(52) Cooperative Patent Classification (CPC):
**G01M 11/00**

(86) International application number:
**PCT/JP2019/034551**

(87) International publication number:
**WO 2021/044511 (11.03.2021 Gazette 2021/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NIPPON TELEGRAPH AND TELEPHONE CORPORATION**
**Chiyoda-ku, Tokyo 100-8116, (JP)**

(72) Inventors:
• **IIDA, Daisuke**
  **Musashino-shi, Tokyo 180-8585 (JP)**
• **OKAMOTO, Keiji**
  **Musashino-shi, Tokyo 180-8585 (JP)**
• **OSHIDA, Hiroyuki**
  **Musashino-shi, Tokyo 180-8585 (JP)**

(74) Representative: **v. Bezold & Partner Patentanwälte - PartG mbB**
**Ridlerstraße 57**
**80339 München (DE)**

(54) **OPTICAL FIBER CABLE SENSING DEVICE, OPTICAL FIBER CABLE SENSING METHOD, AND PROGRAM**

(57)    The present invention intends to provide an optical fiber cable sensing apparatus capable of measuring longitudinal directional distribution of curvature and torsion, without using a specially structured optical fiber sensor. This apparatus includes means for inputting data of longitudinal directional distribution of distortion (bending loss, polarization variation) measured for each optical fiber accommodated in an optical fiber cable to be measured and data indicating the position of each measurement object optical fiber on a cable cross section, means for calculating curvature vector $\kappa$ of the optical fiber cable to be measured, at the same spot, based on the distortion (bending loss, polarization variation) of each optical fiber at the spot and the position of the optical fiber on the cable cross section, and means for calculating torsion $\tau$ of the optical fiber cable to be measured at the spot from the calculated curvature vector $\kappa$.

## Fig. 2

[2]

OPTICAL FIBER CABLE SENSING APPARATUS — 10

MEASURING UNIT — 11

ARITHMETIC UNIT — 12

— 20

EP 4 027 126 A1

**Description**

Technical Field

The present disclosure relates to an optical fiber cable sensing apparatus, an optical fiber cable sensing method, and a program, for estimating the position of a laid optical fiber cable.

Background Art

The laid optical fiber cable can be represented as the locus of a curve in a three-dimensional space. The locus of the curve in the three-dimensional space can be analyzed by acquiring curvature $\kappa$ and torsion $\tau$ and using the formula of Frenet-Serret. Here, the curvature $\kappa$ is a value representing how much the curve is bent in which direction. The torsion $\tau$ is a value representing how much rotation is made with respect to initial coordinates (absolute coordinates with the top and bottom of the globe as reference), which serve as the reference in the bending direction. The "absolute coordinates" are, for example, coordinates defined using an x axis and a z axis, which are orthogonal to each other on a plane parallel to an arbitrary contact surface when the globe is a sphere, and a y axis being the perpendicular of this xz plane.

A position vector T(s) at an arbitrary position can be acquired by substituting the curvature $\kappa$ and the torsion $\tau$ acquired at the arbitrary position of the curve into the formula of Frenet-Serret. A locus vector r(s) of the curve can be obtained by integrating the position vector T(s).

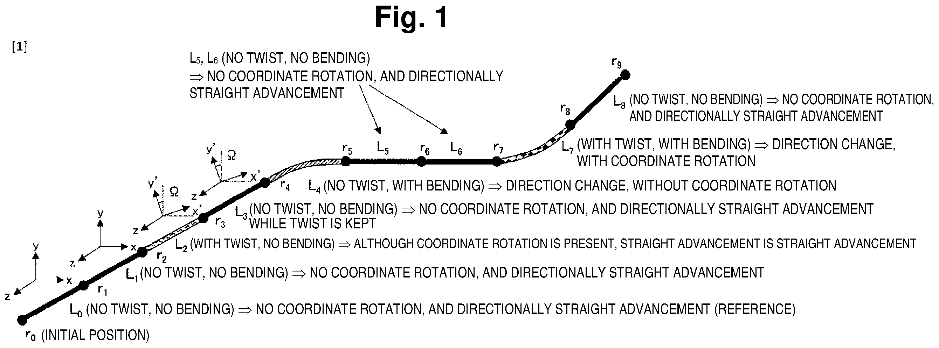

Fig. 1 is an image illustrating a method for estimating the position of an optical fiber cable. As illustrated in Fig. 1, when "rotation $\Omega$ by twist" and "direction vector r by bending" are known, it is possible to estimate the position of the optical fiber cable. Here, the "rotation $\Omega$ by twist" indicates the rotation by an amount of $\Omega$ around a z' axis (central axis direction of the optical fiber cable), with respect to an initial position ro. The "direction vector r by bending" is the locus vector r(s). In Fig. 1, $r_j$ (j is an integer equal to or greater than 0) represents the position of the optical fiber cable in the longitudinal direction, and $L_j$ represents a section of the optical fiber cable. Further, an x' axis and a y' axis are reference axes of the optical fiber cable, which are rotated by $\Omega$ with respect to the x axis and the y axis, which are the absolute coordinates.

In the case of analyzing the curve locus in this manner, a method in which an FBG (Fiber Bragg Grating)-given multi-core optical fiber is used to calculate the curvature $\kappa$ and the torsion $\tau$ is known (e.g., refer to Non-Patent Literatures 1 and 2). Since FBG causes the wavelength of reflected light to vary depending on fiber bending (since Bragg wavelength shifts), a longitudinal directional distortion distribution of each core is measured by OFDR (Optical Frequency Domain Reflectometry). Then, the curvature $\kappa$ and the torsion $\tau$ are calculated based on a cross-sectional directional distortion distribution obtained from the distortion of each core at the same spot.

Citation List

Non-Patent Literature

Non-Patent Literature 1: "Shape sensing using multi-core fiber optic cable and parametric curve solution", Optics Express, Vol.20, No.3, pp.2967-2973 Non-Patent Literature 2: "Bend measurement using Bragg gratings in multicore fiber", Electronics letters, vol.36, no.2, pp.120-121

Summary of the Invention

Technical Problem

The conventional method, in which the FBG-given multi-core optical fiber is used as a sensor medium, has the following problem. First, since a special structure of the FBG-given multi-core optical fiber makes it difficult to increase the longitudinal size of the optical fiber, using the conventional method is difficult in the analysis of a curve locus extending in a long distance. Further, in order to improve the sensitivity to distortion, the core pitch of the FBG-given multi-core optical fiber is required to be large. However, from the viewpoint of securing mechanical strength and transmission characteristics, it is difficult to set the core pitch to be large. At present, the core pitch is limited to several tens of $\mu$m. That is, it is difficult to improve the measurement accuracy by the conventional method.

Therefore, in order to solve the above problem, the present invention has an object to provide an optical fiber cable sensing apparatus, an optical fiber cable sensing method, and a program capable of measuring longitudinal directional distribution of the curvature and torsion without using a specially structured optical fiber sensor.

Means for Solving the Problem

In order to achieve the above object, an optical fiber cable sensing apparatus according to the present invention is configured to measure the longitudinal directional distribution of curvature and torsion using a general optical fiber cable in which single-mode optical fibers are accommodated.

Specifically, the optical fiber cable sensing apparatus according to the present invention includes a measuring unit that irradiates arbitrary N (N is an integer less than M) single-mode optical fibers, of M (M is an integer equal to or greater than 3) single-mode optical fibers accommodated in an optical fiber cable, with test light, and measures longitudinal directional distribution of physical quantity representing bending for every N single-mode optical fibers, and an arithmetic unit configured to refer to position and the physical quantity of each of the N single-mode optical fibers in a cross section of the optical fiber cable, at an arbitrary spot of the optical fiber cable in the longitudinal direction, and calculate curvature $\kappa$ of the optical fiber cable at the arbitrary spot based on Math. 1 and calculate torsion $\tau$ of the optical fiber cable at the arbitrary spot based on Math. 2.

[Math. 1]

$$\kappa = -\hat{x}\sum_{i=1}^{N}\frac{\varepsilon_i}{r_i}\cos\theta_i - \hat{y}\sum_{i=1}^{N}\frac{\varepsilon_i}{r_i}\sin\theta_i \qquad (1)$$

Here, $\hat{x}$ and $\hat{y}$ are unit vectors in the x-axis direction and the y-axis direction, respectively.

[Math. 2]

$$\theta = angle\,(\kappa)$$
$$\tau(s) = \theta'(s) \qquad (2)$$

in which,

i: number assigned to the N single-mode optical fibers,
$\varepsilon_i$: the physical quantity at the arbitrary spot of an i-th single-mode optical fiber of the N single-mode optical fibers,
$r_i$: distance between the i-th single-mode optical fiber and a bending axis in the cross section,
$\theta_i$: angular offset of the i-th single-mode optical fiber from the x axis in the cross section,
angle(v): angle of a vector v with respect to the x axis,
$\theta$: gradient of a vector of curvature $\kappa$ at an arbitrary position with respect to the x axis,
$\theta'$(s): differentiation of the $\theta$, relating to a central arc length s of the optical fiber cable, and
bending axis: straight line parallel to a straight line vertically passing the center of a circle having curvature radius, at a contact point of a tangential line in contact with the central axis of the optical fiber cable at an arbitrary position, and passing through the contact point.

Further, an optical fiber cable sensing method according to the present invention is characterized by

irradiating arbitrary N (N is an integer less than M) single-mode optical fibers, of M (M is an integer equal to or greater than 3) single-mode optical fibers accommodated in an optical fiber cable, with test light,
measuring longitudinal directional distribution of physical quantity representing bending for every N single-mode optical fibers, and
referring to position and the physical quantity of each of the N single-mode optical fibers in a cross section of the optical fiber cable, at an arbitrary spot of the optical fiber cable in the longitudinal direction, and calculating curvature $\kappa$ of the optical fiber cable at the arbitrary spot based on Math. 1, and calculating torsion $\tau$ of the optical fiber cable at the arbitrary spot based on Math. 2.

The optical fiber cable sensing apparatus or method measures an optical fiber cable accommodating a plurality of single-mode optical fibers with the measuring unit for the physical quantity varying depending on bending, and acquires the longitudinal directional distribution of the physical quantity of each core. Further, the optical fiber cable sensing apparatus or method calculates the curvature $\kappa$ and the torsion $\tau$ using Math. 1 and Math. 2 from the physical quantity distribution of each core in the cross section at the arbitrary spot.

Since the sensor is an optical fiber cable using single-mode optical fibers, the optical fiber cable sensing apparatus or method facilitates long-length manufacturing, and can measure the physical quantity of the optical fiber cable over a long distance. Further, the optical fiber cable using single-mode optical fibers makes it easy to increase the clearance between cores (distance between single-mode optical fibers).

Accordingly, the present invention can provide an optical fiber cable sensing apparatus and an optical fiber cable sensing method capable of measuring the longitudinal directional distribution of curvature and torsion without using a specially structured optical fiber sensor.

The arithmetic unit of the optical fiber cable sensing apparatus according to the present invention is characterized by calculating a central axis locus r(s) of the optical fiber cable by substituting the curvature $\kappa$ and the torsion $\tau$ in into Math. 3. The present optical fiber cable sensing apparatus can estimate a long distance curve locus (optical fiber cable path).

[Math. 3]

$$r(s) = \int T(s)ds + r0$$

$$T(s) = \frac{d}{ds}\begin{bmatrix} e_1 \\ e_2 \\ e_3 \end{bmatrix} = \begin{bmatrix} 0 & \kappa & 0 \\ -\kappa & 0 & \tau \\ 0 & -\tau & 0 \end{bmatrix}\begin{bmatrix} e_1 \\ e_2 \\ e_3 \end{bmatrix} \qquad (3)$$

in which,

T(s): position vector,
$r_0$: initial position,
$e_1$: unit tangent vector,
$e_2$: unit principal normal vector,
$e_3$: unit binormal vector, and
d/ds: change amount per unit arc length.

The measuring unit of the optical fiber cable sensing apparatus according to the present invention is characterized by measuring distortion amount, bending loss, or polarization variation, as the physical quantity. For example, using OFDR as the measuring unit can measure the distortion amount. The bending loss can be measured using, as the measuring unit, 1$\mu$-OTDR that performs high sensitivity measurement in which light in the wavelength band of 1$\mu$m, serving as a two-mode region, is used and higher mode scattered light is observed. The polarization variation can be measured using, as the measuring unit, P-OTDR that performs measurement for each polarization state.

The arithmetic unit of the optical fiber cable sensing apparatus according to the present invention is characterized by using at least two of the distortion amount, the bending loss, and the polarization variation, as the physical quantities, and using a value obtained by statistically processing the curvature $\kappa$ calculated for each physical quantity, and a value obtained by statistically processing the torsion $\tau$ calculated for each physical quantity, as new values of the curvature $\kappa$ and the torsion $\tau$, respectively. Here, the statistical processing is for averaging values measured by respective measurement techniques or taking a median value of the measured values. Using various measurement techniques can improve bending estimation accuracy.

The present invention is a program for causing a computer to function as the optical fiber cable sensing apparatus. The optical fiber cable sensing apparatus according to the present invention can also be realized by a computer and a program. The program can be recorded on a recording medium or provided via a network.

That is, the apparatus of the present invention includes means for inputting data of longitudinal directional distribution of distortion (which may be bending loss or polarization variation) measured for each optical fiber accommodated in an optical fiber cable to be measured and data indicating the position of each measurement object optical fiber on a cable cross section, means for calculating curvature vector $\kappa$ of the optical fiber cable to be measured, at the same spot, based on the distortion (which may be bending loss or polarization variation) of each optical fiber at the spot and the position of the optical fiber on the cable cross section, by using Math. 1, and means for calculating torsion $\tau$ of the optical fiber cable to be measured at the spot from the calculated curvature vector $\kappa$, by using Math. 2.

The above inventions can be combined with each other if it is possible.

Effects of the Invention

The present invention can provide an optical fiber cable sensing apparatus, an optical fiber cable sensing method, and a program capable of the measuring longitudinal directional distribution of curvature and torsion without using a specially structured optical fiber sensor.

Brief Description of Drawings

[Fig. 1] Fig. 1 is an image illustrating a method for estimating the position of an optical fiber cable.
[Fig. 2] Fig. 2 is a diagram illustrating an optical fiber cable sensing apparatus according to the present invention.
[Fig. 3] Fig. 3 is a diagram in which one of single-mode optical fibers accommodated in an optical fiber cable is measured using the optical fiber cable sensing apparatus according to the present invention.
[Fig. 4] Fig. 4 is a diagram illustrating the position of the single-mode optical fiber measured by the optical fiber cable sensing apparatus according to the present invention in a cross section of the optical fiber cable.
[Fig. 5] Fig. 5 is an example of cable cross-sectional distortion distribution calculated by the optical fiber cable sensing apparatus according to the present invention.
[Fig. 6] Fig. 6 is a diagram illustrating the definition of "bending axis".
[Fig. 7] Fig. 7 is a diagram illustrating calculation performed by the optical fiber cable sensing apparatus according to the present invention.
[Fig. 8] Fig. 8 is a flowchart illustrating an optical fiber cable sensing method according to the present invention.
[Fig. 9] Fig. 9 is a diagram illustrating the optical fiber cable sensing apparatus according to the present invention.

Description of Embodiments

Embodiments of the present invention will be described with reference to attached drawings. The embodiments described below are practical examples of the present invention, and the present invention is not limited to the following embodiments. In the present specification and the drawings, components whose reference numerals are the same shall indicate the same components.

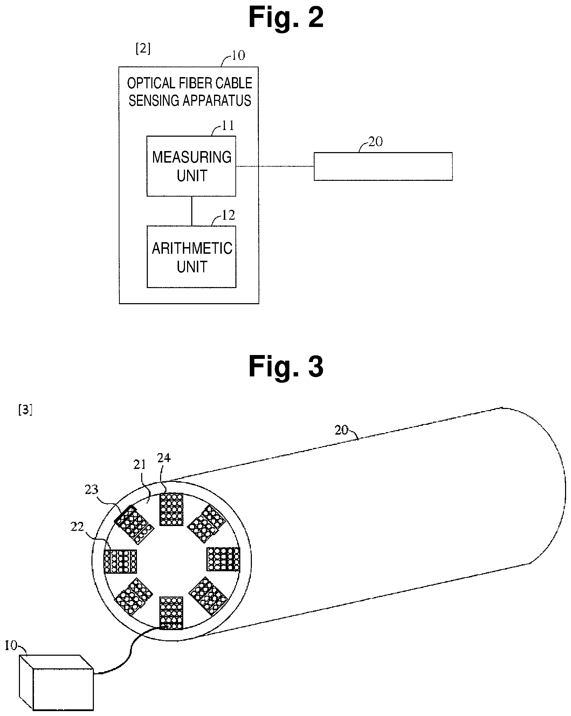

Fig. 2 is a diagram illustrating an optical fiber cable sensing apparatus 10 of the present embodiment. Fig. 3 is a diagram in which one of single-mode optical fibers included in an optical fiber cable 20 is measured by the optical fiber cable sensing apparatus 10. The optical fiber cable 20 is a tape slot type, and includes five sets of four-core optical fiber tape corewires 23 inserted in each groove 22 of a slot 21. The optical fiber tape core-wire 23 has four single-mode optical fibers 24 arranged in parallel. In the present embodiment, although the optical fiber cable 20 is described as the tape slot type, the optical fiber cable that the optical fiber cable sensing apparatus 10 can measure is not limited to the tape slot type. It is meant that the single-mode optical fiber is an optical fiber in which light propagates in a single mode at the wavelength of test light.

The optical fiber cable sensing apparatus 10 includes a measuring unit 11 that irradiates arbitrary N (N is an integer less than M) single-mode optical fibers 24, of M (M is an integer equal to or greater than 3) single-mode optical fibers 24 accommodated in the optical fiber cable 20, with the test light and measures longitudinal directional distribution of physical quantity representing the bending for every N single-mode optical fibers 24, and an arithmetic unit 12 configured to refer to position and the physical quantity of each of the N single-mode optical fibers 24 in a cross section of the optical fiber cable 20, at an arbitrary spot of the optical fiber cable 20 in the longitudinal direction, and calculate curvature $\kappa$ of the optical fiber cable 20 at the arbitrary spot based on Math. 1 and calculate torsion $\tau$ of the optical fiber cable 20 at the arbitrary spot based on Math. 2. In the example illustrated in Fig. 3, M = 160. Further, Math. 1 and Math. 2 will be described below.

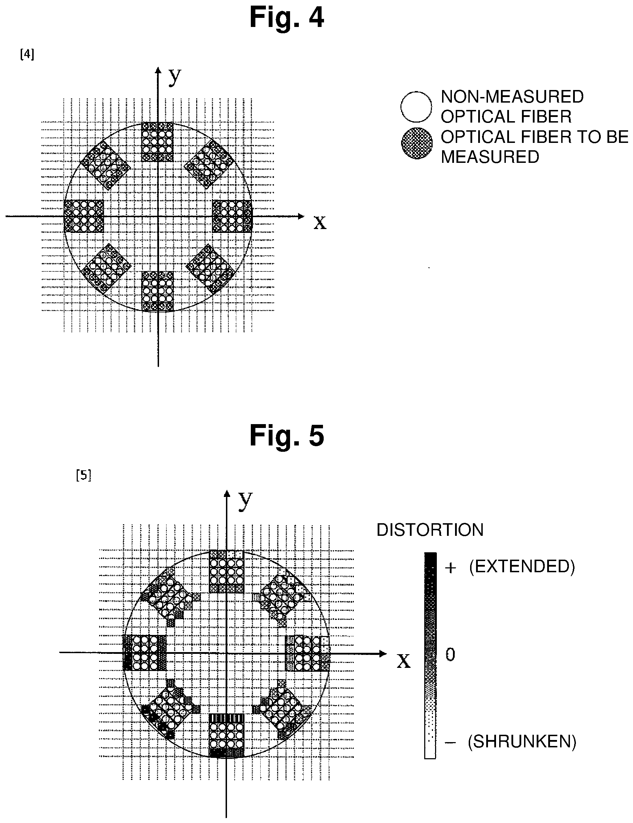

The optical fiber cable sensing apparatus 10 is not required to measure all single-mode optical fibers 24. Fig. 4 is a diagram illustrating the position of the single-mode optical fibers 24 measured by the optical fiber cable sensing apparatus 10. The optical fiber cable sensing apparatus 10 measures, for each groove 22, four single-mode optical fibers 24 on the outermost periphery and four single-mode optical fibers 24 on the innermost periphery. That is, in the example of Fig. 4, N = 64. The x and y axes in Figs. 4 and 5 are illustrated with the central axis of the optical fiber cable 20 being set at x = 0 and y = 0.

The measuring unit 11 is characterized by measuring distortion amount, bending loss, or polarization variation, as the physical quantity. In the following description, although a case in which the distortion amount is measured as the physical quantity will be described, the curvature $\kappa$ and the torsion $\tau$ can be calculated similarly by measuring other physical quantity. The measuring unit 11 measures, for each single-mode optical fiber 24 in the optical fiber cable 20, the distortion amount at position z by a means for measuring a longitudinal directional distortion distribution. An example of such a means includes OFDR or B-OFDR (OFDR measuring the distortion distribution by observing Brillouin scattered light). Using B-OTDR (OTDR that measures the distortion distribution by observing the Brillouin scattered light) as the above means can measure long distances as compared with the above-mentioned OFDR.

The arithmetic unit 12 maps the distortion amount of each single-mode optical fiber 24, at an arbitrary position z of the optical fiber cable 20, on three-dimensional space coordinates (in which the center position of the cable corresponds to coordinate 0), and calculates a cable cross-sectional distortion distribution. Fig. 5 illustrates an example of the cable cross-sectional distortion distribution. In the example of Fig. 5, it can be known that the single-mode optical fibers 24 in the first quadrant are shrunken and the single-mode optical fibers 24 in the third quadrant are extended. From the above, it is predicted that the optical fiber cable 20 is curved to the x-axis positive side and y-axis positive side at the arbitrary position z.

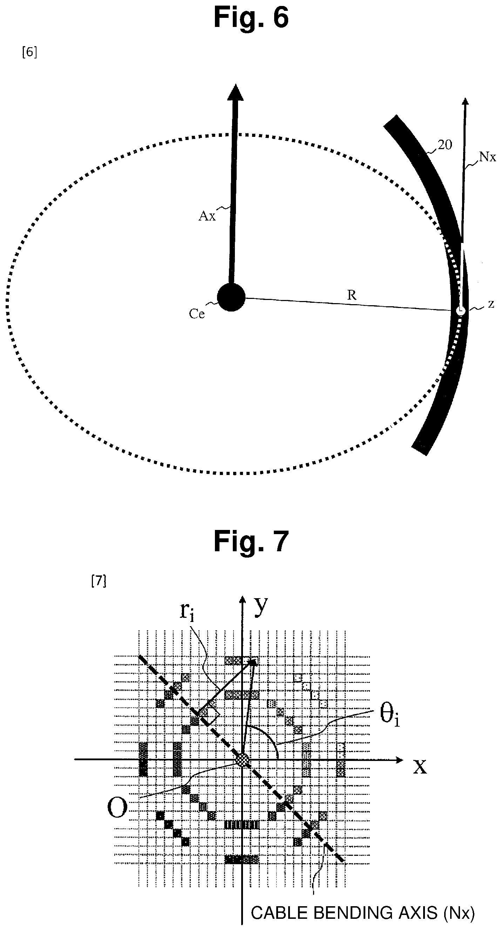

Here, Fig. 6 illustrates the definition of "bending axis". The "bending axis" is a "neutral axis", and is a straight line Nx which is parallel to a straight line Ax vertically passing a center Ce of a circle having curvature radius R, at a contact point of a tangential line in contact with the central axis of the optical fiber cable 20 at the arbitrary position z, and is passing through a center O of the optical fiber cable 20 at the arbitrary position z.

The arithmetic unit 12 takes out the distortion amount for each position of the single-mode optical fiber from the cable cross-sectional distortion distribution illustrated in Fig. 5, and calculates the curvature $\kappa$ using Math. 1 as illustrated in Fig. 7 and calculates the torsion $\tau$ using Math. 2.

[Math. 1]

$$\kappa = -\hat{x} \sum_{i=1}^{N} \frac{\varepsilon_i}{r_i} \cos\theta_i - \hat{y} \sum_{i=1}^{N} \frac{\varepsilon_i}{r_i} \sin\theta_i \qquad (1)$$

Here, $\hat{x}$ and $\hat{y}$ are unit vectors in the x-axis direction and the y-axis direction, respectively.

[Math. 2]

$$\theta = angle\,(\kappa)$$
$$\tau(s) = \theta'(s) \qquad (2)$$

in which,

i: number assigned to single-mode optical fibers,
$\varepsilon_i$: physical quantity at arbitrary spot z of i-th single-mode optical fiber of single-mode optical fibers,
$r_i$: distance between i-th single-mode optical fiber and the bending axis in the cross section,
$\theta_i$: angular offset of i-th single-mode optical fiber from x axis in the cross section,
angle(v): angle of a vector v with respect to x axis,
$\theta$: gradient of a vector of curvature $\kappa$ at arbitrary position z with respect to x axis, and
$\theta'(s)$: differentiation of the $\theta$, relating to central arc length s of the optical fiber cable.

The distortion amount $\varepsilon_i$ can be expressed as $\varepsilon_i = r_i/R$, using the curvature radius R at the arbitrary position and the distance $r_i$ from an optical fiber cable cross-sectional center to the single-mode optical fiber. Here, the bending radius R of the optical fiber cable 20 is $1/\kappa$, and a distortion difference $\Delta\varepsilon$ is proportional to (distance difference)/R. Therefore, $\varepsilon_i \propto \kappa r_i$ holds when the bending axis is based.

[Math. 2A]

$$\kappa_i \equiv -\hat{x}\frac{\varepsilon_i}{r_i}\cos\theta_i - \hat{y}\frac{\varepsilon_i}{r_i}\sin\theta_i \qquad (2A)$$

It can be said that, when the distortion of each single-mode optical fiber is considered as "a distortion vector having direction $\theta$ from the cable center and having magnitude $\varepsilon$ of the distortion", the formula inside $\Sigma$ of Math. 2 is for normalizing each component of the distortion vector by distance r from the bending axis Nx. There is no distortion at the optical fiber cable cross-sectional center O (r = 0), and shrunken distortion occurs on the axis Ax side while extended distortion occurs on the opposite side of axis Ax.

The arithmetic unit 12 can estimate the position of a laid optical fiber cable by calculating a central axis locus r(s) of the optical fiber cable 20, by substituting the curvature $\kappa$ and the torsion $\tau$ into Math. 3 (formula of Frenet-Serret).
[Math. 3]

$$r(s) = \int T(s)ds + r0$$

$$T(s) = \frac{d}{ds}\begin{bmatrix} e_1 \\ e_2 \\ e_3 \end{bmatrix} = \begin{bmatrix} 0 & \kappa & 0 \\ -\kappa & 0 & \tau \\ 0 & -\tau & 0 \end{bmatrix}\begin{bmatrix} e_1 \\ e_2 \\ e_3 \end{bmatrix} \tag{3}$$

in which,

T(s): position vector,
$r_0$: initial position,
$e_1$: unit tangent vector,
$e_2$: unit principal normal vector,
$e_3$: unit binormal vector, and
d/ds: change amount per unit arc length.

The arithmetic unit 12 uses at least two of the distortion amount, the bending loss, and the polarization variation, as physical quantities, and uses a value obtained by statistically processing the curvature $\kappa$ calculated for each physical quantity, and a value obtained by statistically processing the torsion $\tau$ calculated for each physical quantity, as new values of the curvature $\kappa$ and the torsion $\tau$, respectively. The arithmetic unit 12 can cause the measuring unit 11 to measure not only the distortion amount of the single-mode optical fiber 24 but also the bending loss or the polarization variation, and can calculate the curvature $\kappa$ and the torsion $\tau$ by substituting these physical quantities into Math. 1 and Math. 2. Further, averaging or taking a median value of the curvature $\kappa$ and the torsion $\tau$ calculated from the plurality of physical quantities in such a manner can acquire the curvature $\kappa$ and the torsion $\tau$ more accurately.

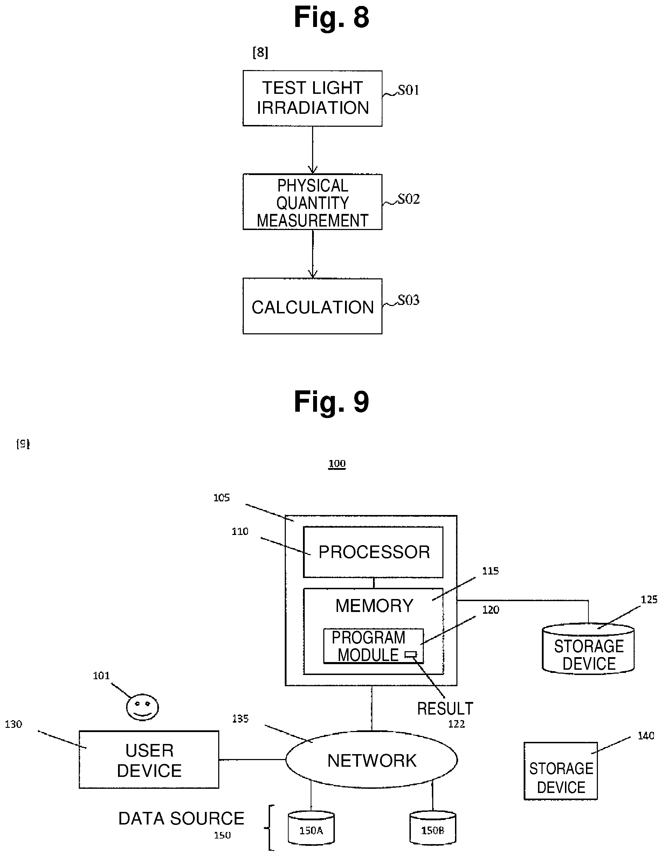

Fig. 8 is a flowchart illustrating an optical fiber cable sensing method performed by the optical fiber cable sensing apparatus 10. The optical fiber cable sensing method includes irradiating arbitrary N (N is an integer less than M) single-mode optical fibers 24, of M (M is an integer equal to or greater than 3) single-mode optical fibers 24 accommodated in the optical fiber cable 20, with test light (step S01), measuring the longitudinal directional distribution of physical quantity representing bending for every N single-mode optical fibers 24 (step S02), and referring to position and the physical quantity of each of the N single-mode optical fibers 24 in a cross section of the optical fiber cable 20, at an arbitrary spot of the optical fiber cable 20 in the longitudinal direction, and calculating the curvature $\kappa$ of the optical fiber cable 20 at the arbitrary spot based on Math. 1 and calculating the torsion $\tau$ of the optical fiber cable 20 at the arbitrary spot based on Math. 2 (step S03).

The arithmetic unit 12 can also be realized by a computer and a program, and the program can be recorded on a recording medium or provided via a network. Fig. 9 is a block diagram of a system 100. The system 100 includes a computer 105 connected to a network 135.

The network 135 is a data communication network. The network 135 may be a private network or a public network, which can include any one or all of (a) a personal area network covering a certain room, for example, (b) a local area network covering a certain building, for example, (c) a campus area network covering a certain campus, for example, (d) a metropolitan area network covering a certain city, for example, (e) a wide area network covering an area in which cities, localities, or nations are neighboring via boundaries thereof, for example, and (f) Internet. The communication is performed, via the network 135, using electric signals and optical signals.

The computer 105 includes a processor 110, and a memory 115 connected to the processor 110. The computer 105 is illustrated as a stand-alone device in the present specification, but the computer 105 is not limited to the illustrated example and may be rather connected to other devices (not illustrated) in a distributed system.

The processor 110 is an electronic device that can be constituted by a logic circuit that responds to an instruction and executes the instruction.

The memory 115 is a storage medium that can be read by a tangible computer in which a computer program is encoded. In this respect, the memory 115 stores data and instructions, i.e., program codes, which can be read and executed by the processor 110 to control operations of the processor 110. The memory 115 can be realized by a random access memory (RAM), a hard drive, a read only memory (ROM), or a combination thereof. One of components constituting the memory 115 is a program module 120.

The program module 120 includes instructions for controlling the processor 110 in such a way as to execute processes described in the present specification. In the present specification, the operations are described as being performed by the computer 105 or the method or processes or their subordinate processes, but these operations are practically performed by the processor 110.

The term "module" is used to indicate a functional operation that may be embodied as any one of integrated configurations constituted by a stand-alone component or a plurality of subordinate components, in the present specification. Accordingly, the program module 120 can be realized as a single module, or as a plurality of modules cooperative in operation. Further, in the present specification, the program module 120 is installed in the memory 115 and accordingly is described as being realized by software. However, it can be realized by hardware (e.g., electronic circuit), firmware, software, or a combination thereof.

The program module 120 is illustrated as being already loaded to the memory 115, but may be configured to be positioned on a storage unit 140 so that it can be later loaded into the memory 115. The storage unit 140 is a storage medium readable for a tangible computer storing the program module 120. Examples of the storage unit 140 include a compact disk, a, magnetic tape, a read only memory, an optical storage medium, a hard drive, or a memory unit constituted by a plurality of parallel hard drives, as well as a universal serial bus (USB) flash drive. Alternatively, the storage unit 140 may be a random access memory, or an electronic storage device of any other type that is positioned in a remote storage system (not illustrated) and connected to the computer 105 via the network 135.

The system 100 further includes a data source 150A and a data source 150B that are collectively referred to as a data source 150 in the present specification and communicably connected to the network 135. In practice, the data source 150 can include an arbitrary number of data sources, namely one or more data sources. The data source 150 includes non-organized data and can include social media.

The system 100 further includes a user device 130 that is operated by a user 101 and connected to the computer 105 via the network 135. An example of the user device 130 includes an input device such as a keyboard or a voice recognition subsystem that enables the user 101 to transmit selection of information and commands to the processor 110. The user device 130 further includes an output device such as a display unit, a printer, or a voice synthesizer. A cursor control unit such as a mouse, a trackball, or a touch sensitive screen enables the user 101 to operate a cursor on the display unit, to transmit further selection of information and commands to the processor 110.

The processor 110 outputs an execution result 122 of the program module 120 to the user device 130. Alternatively, the processor 110 can send the output to a storage unit 125, such as a database or a memory, or can send it to a remote device (not illustrated) via the network 135.

For example, the program module 120 may be a program that executes the flowchart of Fig. 1. The system 100 can be operated as an arithmetic processing unit D.

The term "includes ..." or "provided with ..." designates the presence of a feature, an integer, a process, or a component described there, but it should be interpreted that one or more other features, integers, processes, or components, or their groups are not excluded. The terms "a" and "an" are indefinite articles, and thus any embodiment including two or more same features or the like should not be excluded.

(Other Embodiment)

The present invention is not limited to the above-described embodiments, and various modifications thereof can be carried out without departing from the scope of the present invention. In short, the present invention is not limited to the superordinate embodiment itself, and in the implementation stage, the components can be deformed and embodied without departing from the scope thereof.

In addition, various inventions can be formed by appropriately combining a plurality of components disclosed in the above embodiments. For example, some component may be omitted from the entire components disclosed in the embodiment. Further, components described in different embodiments may be appropriately combined.

Reference Signs List

| | |
|---|---|
| 10 | optical fiber cable sensing apparatus |
| 11 | measuring unit |
| 12 | arithmetic unit |
| 20 | optical fiber cable |
| 21 | slot |

| 22 | groove |
|---|---|
| 23 | optical fiber tape core-wire |
| 24 | single-mode optical fiber |
| 100 | system |
| 101 | user |
| 105 | computer |
| 110 | processor |
| 115 | memory |
| 120 | program module |
| 122 | result |
| 125 | storage unit |
| 130 | user device |
| 135 | network |
| 140 | storage unit |
| 150 | data source |

**Claims**

1. An optical fiber cable sensing apparatus, comprising:

a measuring unit that irradiates arbitrary N (N is an integer less than M) single-mode optical fibers, of M (M is an integer equal to or greater than 3) single-mode optical fibers accommodated in an optical fiber cable, with test light, and measures longitudinal directional distribution of physical quantity representing bending for every N single-mode optical fibers; and
an arithmetic unit configured to refer to position and the physical quantity of each of the N single-mode optical fibers in a cross section of the optical fiber cable, at an arbitrary spot of the optical fiber cable in the longitudinal direction, and calculate curvature $\kappa$ of the optical fiber cable at the arbitrary spot based on Math. 1 and calculate torsion $\tau$ of the optical fiber cable at the arbitrary spot based on Math. 2,

[Math. 1]

$$\kappa = -\hat{x} \sum_{i=1}^{N} \frac{\varepsilon_i}{r_i} \cos \theta_i - \hat{y} \sum_{i=1}^{N} \frac{\varepsilon_i}{r_i} \sin \theta_i \qquad (1)$$

where, $\hat{x}$ and $\hat{y}$ are unit vectors in the x-axis direction and the y-axis direction, respectively;

[Math. 2]

$$\theta = angle\,(\kappa)$$
$$\tau(s) = \theta'(s) \qquad\qquad\qquad (2)$$

where,

i: number assigned to the N single-mode optical fibers,
$\varepsilon_i$: the physical quantity at the arbitrary spot of an i-th single-mode optical fiber of the N single-mode optical fibers,
$r_i$: distance between the i-th single-mode optical fiber and a bending axis in the cross section,
$\theta_i$: angular offset of the i-th single-mode optical fiber from the x axis in the cross section,
angle(v): angle of a vector v with respect to the x axis,
$\theta$: gradient of a vector of curvature $\kappa$ at an arbitrary position with respect to the x axis,
$\theta'(s)$: differentiation of the $\theta$, relating to a central arc length s of the optical fiber cable, and
bending axis: straight line which is parallel to a straight line vertically passing the center of a circle having curvature radius, at a contact point of a tangential line in contact with the central axis of the optical fiber cable at an arbitrary position, and is passing through the contact point.

2. The optical fiber cable sensing apparatus according to claim 1, wherein the arithmetic unit calculates a central axis locus r(s) of the optical fiber cable by substituting the curvature $\kappa$ and the torsion $\tau$ into Math. 3. [Math. 3]

$$r(s) = \int T(s)ds + r0$$

$$T(s) = \frac{d}{ds}\begin{bmatrix} e_1 \\ e_2 \\ e_3 \end{bmatrix} = \begin{bmatrix} 0 & \kappa & 0 \\ -\kappa & 0 & \tau \\ 0 & -\tau & 0 \end{bmatrix}\begin{bmatrix} e_1 \\ e_2 \\ e_3 \end{bmatrix} \tag{3}$$

where,

T(s): position vector,
$r_0$: initial position,
$e_1$: unit tangent vector,
$e_2$: unit principal normal vector,
$e_3$: unit binormal vector, and
d/ds: change amount per unit arc length.

3. The optical fiber cable sensing apparatus according to claim 1 or 2, wherein the measuring unit measures, as the physical quantity, distortion amount, bending loss, or polarization variation.

4. The optical fiber cable sensing apparatus according to claim 3, wherein the arithmetic unit uses at least two of the distortion amount, the bending loss, and the polarization variation, as the physical quantities, and uses a value obtained by statistically processing the curvature $\kappa$ calculated for each physical quantity and a value obtained by statistically processing the torsion $\tau$ calculated for each physical quantity, as new values of the curvature $\kappa$ and the torsion $\tau$, respectively.

5. An optical fiber cable sensing method comprising:

irradiating arbitrary N (N is an integer less than M) single-mode optical fibers, of M (M is an integer equal to or greater than 3) single-mode optical fibers accommodated in an optical fiber cable, with test light;
measuring longitudinal directional distribution of physical quantity representing bending for every N single-mode optical fibers; and
referring to position and the physical quantity of each of the N single-mode optical fibers in a cross section of the optical fiber cable, at an arbitrary spot of the optical fiber cable in the longitudinal direction, and calculating curvature $\kappa$ of the optical fiber cable at the arbitrary spot based on Math. 1 and calculating torsion $\tau$ of the optical fiber cable at the arbitrary spot based on Math. 2,
[Math. 1]

$$\kappa = -\hat{x}\sum_{i=1}^{N}\frac{\varepsilon_i}{r_i}\cos\theta_i - \hat{y}\sum_{i=1}^{N}\frac{\varepsilon_i}{r_i}\sin\theta_i \tag{1}$$

where, $\hat{x}$ and $\hat{y}$ are unit vectors in the x-axis direction and the y-axis direction, respectively;
[Math. 2]

$$\theta = angle\,(\kappa)$$

$$\tau(s) = \theta'(s) \tag{2}$$

where,

i: number assigned to the N single-mode optical fibers,

$\varepsilon_i$: the physical quantity at the arbitrary spot of an i-th single-mode optical fiber of the N single-mode optical fibers,

$r_i$: distance between the i-th single-mode optical fiber and the center of a bending axis in the cross section,

$\theta_i$: angular offset of the i-th single-mode optical fiber from the x axis in the cross section,

angle (v): angle of a vector v with respect to the x axis,

$\theta$: gradient of a vector of curvature $\kappa$ at an arbitrary position with respect to the x axis,

$\theta'(s)$: differentiation of the $\theta$, relating to a central arc length s of the optical fiber cable, and

bending axis: straight line which is parallel to a straight line vertically passing the center of a circle having curvature radius, at a contact point of a tangential line in contact with the central axis of the optical fiber cable at an arbitrary position, and is passing through the contact point.

6. A program that causes a computer to function as the optical fiber cable sensing apparatus according to any one of claims 1 to 4.

## Fig. 1

[1]

$L_5$, $L_6$ (NO TWIST, NO BENDING)
⇒ NO COORDINATE ROTATION, AND DIRECTIONALLY
STRAIGHT ADVANCEMENT

$L_8$ (NO TWIST, NO BENDING) ⇒ NO COORDINATE ROTATION,
AND DIRECTIONALLY STRAIGHT ADVANCEMENT

$r_9$

$r_8$

$r_5$   $L_5$   $r_6$   $L_6$   $r_7$

$L_7$ (WITH TWIST, WITH BENDING) ⇒ DIRECTION CHANGE,
WITH COORDINATE ROTATION

$r_4$   $L_4$ (NO TWIST, WITH BENDING) ⇒ DIRECTION CHANGE, WITHOUT COORDINATE ROTATION

$L_3$ (NO TWIST, NO BENDING) ⇒ NO COORDINATE ROTATION, AND DIRECTIONALLY STRAIGHT ADVANCEMENT
WHILE TWIST IS KEPT

$r_3$

$r_2$

$L_2$ (WITH TWIST, NO BENDING) ⇒ ALTHOUGH COORDINATE ROTATION IS PRESENT, STRAIGHT ADVANCEMENT IS STRAIGHT ADVANCEMENT

$L_1$ (NO TWIST, NO BENDING) ⇒ NO COORDINATE ROTATION, AND DIRECTIONALLY STRAIGHT ADVANCEMENT

$r_1$

$L_0$ (NO TWIST, NO BENDING) ⇒ NO COORDINATE ROTATION, AND DIRECTIONALLY STRAIGHT ADVANCEMENT (REFERENCE)

$r_0$ (INITIAL POSITION)

# Fig. 2

[2]

OPTICAL FIBER CABLE
SENSING APPARATUS ~10

MEASURING
UNIT ~11

ARITHMETIC
UNIT ~12

~20

# Fig. 3

[3]

# Fig. 4

[4]

NON-MEASURED
OPTICAL FIBER
OPTICAL FIBER TO BE
MEASURED

# Fig. 5

[5]

DISTORTION

+ (EXTENDED)

0

− (SHRUNKEN)

# Fig. 6

[6]

# Fig. 7

[7]

CABLE BENDING AXIS (Nx)

# Fig. 8

[8]

```
TEST LIGHT
IRRADIATION          ~S01

PHYSICAL
QUANTITY             ~S02
MEASUREMENT

CALCULATION          ~S03
```

# Fig. 9

[9]

<u>100</u>

```
                    105

               110
                         PROCESSOR
                                        115

                         MEMORY
                                        120
                         PROGRAM
                         MODULE                STORAGE
                                               DEVICE      125

  101

                                RESULT
                                122
  130        135
    USER              NETWORK              STORAGE      140
    DEVICE                                 DEVICE

  DATA SOURCE
        150        150A      150B
```

## INTERNATIONAL SEARCH REPORT

International application No.

PCT/JP2019/034551

| A. CLASSIFICATION OF SUBJECT MATTER |
| --- |
| Int.Cl. G01M11/00(2006.01)i |

According to International Patent Classification (IPC) or to both national classification and IPC

| B. FIELDS SEARCHED |
| --- |
| Minimum documentation searched (classification system followed by classification symbols) |
| Int.Cl. G01M11/00-11/08, G01B11/00-11/30, G01D5/26-5/40, G01L1/00-5/28 |

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

| Electronic data base consulted during the international search (name of data base and, where practicable, search terms used) |
| --- |
| JSTPlus/JMEDPlus/JST7580 (JDreamIII) |

### C. DOCUMENTS CONSIDERED TO BE RELEVANT

| Category* | Citation of document, with indication, where appropriate, of the relevant passages | Relevant to claim No. |
| --- | --- | --- |
| A | MOORE, Jason P., "Shape sensing using multi-core fiber optic cable and parametric curve solutions", OPTICS EXPRESS, 30 January 2011, vol. 20, no. 3, pp. 2967–2973 | 1–6 |
| A | JP 2016-102689 A (NIPPON TELEGRAPH AND TELEPHONE CORP.) 02 June 2016, claim 2, paragraph [0018], fig. 4 (Family: none) | 1–6 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 18 November 2019 (18.11.2019) | 03 December 2019 (03.12.2019) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

17

**INTERNATIONAL SEARCH REPORT**

| International application No. |
|---|
| PCT/JP2019/034551 |

C (Continuation).   DOCUMENTS CONSIDERED TO BE RELEVANT

| Category* | Citation of document, with indication, where appropriate, of the relevant passages | Relevant to claim No. |
|---|---|---|
| A | SZOSTKIEWICZ, Lukasz, "High-resolution distributed shape sensing using phase-sensitive optical time-domain reflectometry and multicore fibers", Optics Express, 10 July 2019, vol. 27, no. 15, pp. 20763-20773 | 1-6 |
| A | JP 2005-183411 A (CANON INC.) 07 July 2005, paragraphs [0122]-[0125] (Family: none) | 1-6 |
| A | US 2018/0238680 A1 (KHOMENKO, Anton) 23 August 2018, entire text, all drawings (Family: none) | 1-6 |
| A | WO 2018/075911 A1 (SANBORN, Eric E.) 26 April 2018, entire text, all drawings (Family: none) | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Shape sensing using multi-core fiber optic cable and parametric curve solution. *Optics Express,* vol. 20 (3), 2967-2973

- Bend measurement using Bragg gratings in multicore fiber. *Electronics letters,* vol. 36 (2), 120-121